# EUROPEAN PATENT SPECIFICATION

(11) **EP 0 497 559 B1**
(45) Date of publication and mention of the grant of the patent: **29.03.1995**
(21) Application number: 92300720.7
(22) Date of filing: 28.01.1992
(51) Int. Cl.: G11B 15/467

(54) **Servo control devices for video apparatus**
Servo-Steurungssystem für Videogerät
Système de servo-contrôle pour appareil vidéo

(30) Priority: 30.01.1991 JP 10203/91
(43) Date of publication of application: 05.08.1992
(73) Proprietor: SONY CORPORATION, Tokyo (JP)
(72) Inventor: Nagai, Yasuo, c/o Patent Division, Shinagawa-ku, Tokyo 141 (JP); Yoshihiro, Mitsugu, c/o Patent Division, Shinagawa-ku, Tokyo 141 (JP)
(74) Representative: Cotter, Ivan John

(56) References cited:
- EP-A- 0 236 588
- US-A- 4 536 806
- IEEE TRANSACTIONS ON CONSUMER ELECTRONICS vol. 35, no. 4, November 1989, NEW YORK US pages 733 - 739 Y. KOHSAKA 'Advanced single-chip microcomputer for system and servo control of home video vcrs'
- PATENT ABSTRACTS OF JAPAN vol. 14, no. 128 (P-1019)9 March 1990 & JP-A-13 19 854 ( NEC CORP )
- PATENT ABSTRACTS OF JAPAN vol. 8, no. 169 (P-292)4 August 1984 & JP-A-59 065 306 ( CANON KK ) 13 April 1984

## Description

This invention relates to servo control devices for video apparatus.

There is known, for example, from Japanese laid-open patent specification 58/186274 (corresponding to US-A-4 536 806), a control system employing a microprocessor for controlling a drum servo, a capstan servo and a reel servo of a video tape recorder (VTR).

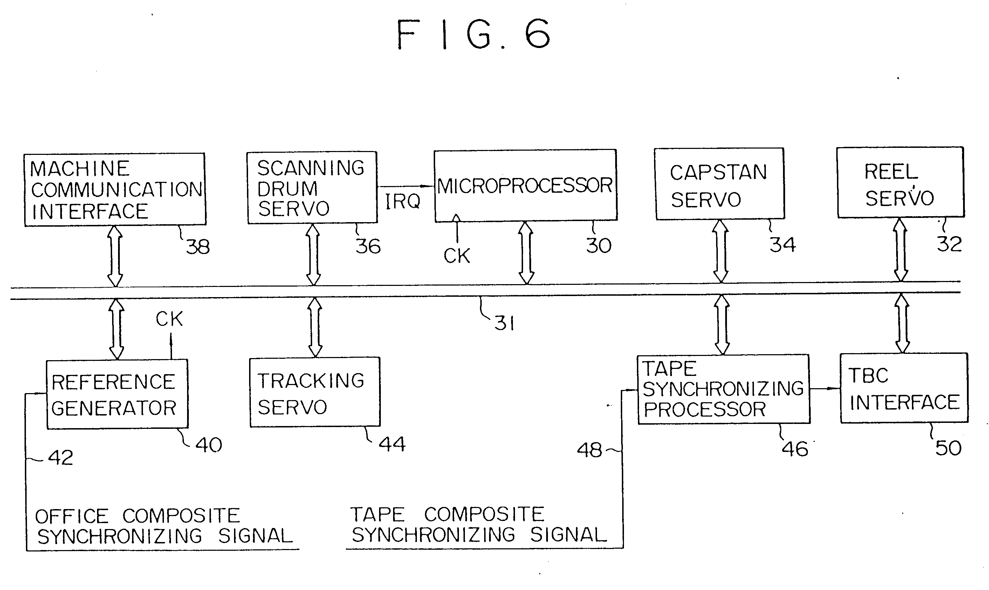

As shown in Figure 6, the above control system includes a single microprocessor 30 connected through a data bus 31 to a reel servo 32, a capstan servo 34, a scanning drum servo 36 and a machine communication interface 38, so that various operational modes of the VTR are controlled. In this example, an interrupt request (IRQ) to the microprocessor 30 is supplied from the drum servo 36.

A reference generator 40 generates a system clock on the basis of a studio reference composite synchronizing signal supplied thereto through a line 42, and synchronizes clock timings of the microprocessor 30 and the servo circuits.

The microprocessor 30 is connected to an automatic scanning tracking servo 44 and a tape synchronizing processor 46. A tape composite synchronizing signal is supplied through a line 48 to the processor 46, and an output from the processor 46 is supplied to a time base correction interface 50.

Where a single microprocessor is used as described above, the following problem occurs.

In the drum servo circuit, phase servo and speed servo are concurrently employed. Feedback is carried out at the rate of a rotational speed of a drum motor in the phase servo, and at the rate of several times the rotational speed in the speed servo.

Accordingly, interruption of the microprocessor occurs at the rate of several times the rotational speed, and speed detection is effected at this rate. Therefore the higher the rotational speed of the drum motor, the higher the frequency of interruption, thus increasing the burden on the microprocessor.

In an ordinary analogue VTR, the rotational speed of the drum is low, for example, 30 rps. Accordingly, even when interruption is carried out six times per rotation of the drum, the interruption period is relatively long, at 5.5 mS.

However, in a D-1 type (a so-called 4:2:2 type) VTR designed digitally to record a component type video signal (Y, R-Y, B-Y), the rotational speed of the drum is set to a relatively high value such as 150 rps. Accordingly, if interruption is carried out six times per rotation of the drum, for example, the interruption period is 1.1 mS, causing an increase in the burden on the microprocessor.

In the capstan servo circuit, the rotational speed of a capstan motor is low, such as at most 20 rps. Accordingly, even when interruption is carried out six times per rotation of the capstan motor, the interruption period becomes relatively long, such as 8 mS or more, thus not causing any serious problems.

In the reel servo circuit, it is necessary to extend a response characteristic of a tension servo up to about 100 Hz. Further, it is necessary to carry out feedback at the rate of 500 times/S or more, for example, to reduce the phase lag. In other words, interrupt processing with a short period of, for example, 2 mS, is required, which causes an increase in the burden on the microprocessor.

Where the three kinds of servos are processed by a single microprocessor, the interruption frequency is increased. As a result, the burden on the microprocessor is further increased, so that processing overlaps occur causing process waiting, whereby the interruption processing cannot be carried out with a predetermined timing, and the servo performance is therefore impaired.

To avoid this reduction in the servo performance, the three kinds of servos could be processed by respective independent microprocessors.

However, in that case, the reel servo and the capstan servo, which are closely related to each other in the tape running control, are undesirably separated. As a result, problems occur in the tape running control, such that selection between a reel running mode and a capstan running mode becomes unsmooth and slow, or acceleration and deceleration during capstan running become slow.

According to the present invention there is provided a servo control device for a video signal recording and reproducing apparatus including a rotary magnetic head, a supply reel around which a magnetic tape is wound, a take-up reel for taking up said magnetic tape, and a capstan for transporting said magnetic tape between said reels via said magnetic head, wherein a video signal is recorded on and/or reproduced from said magnetic tape in normal operating modes by said magnetic head, said servo control device comprising:
first servo means for generating a first condition signal indicative of a rotational condition of said magnetic head, and rotationally driving said magnetic head according to a first control signal;
second servo means for generating a second condition signal indicative of a rotational condition of said supply reel and a third condition signal indicative of a rotational condition of said take-up reel, rotationally driving said supply reel according to a second control signal, and rotationally driving said take-up reel according to a third control signal;
third servo means for generating a fourth condition signal indicative of a rotational condition of said capstan, and rotationally driving said capstan according to a fourth control signal; and
a microprocessor for receiving said first condition signal and generating said first control signal for controlling rotation of said magnetic head according to said first condition signal;
characterised by:
a second microprocessor for receiving said second, third and fourth condition signals and generating said second control signal for controlling rotation of said supply reel, said third control signal for controlling rotation of said take-up reel, and said fourth control signal for controlling rotation of said capstan, according to said second, third and fourth condition signals; and
control means for controlling said firstmentioned microprocessor and said second microprocessor in dependence on a command signal.

An embodiment of the invention may comprise a servo control device for a VTR including drum servo means for controlling rotation of a drum mounting a magnetic head thereon, reel servo means for controlling rotation of a take-up reel and a supply reel, capstan servo means for controlling rotation of a capstan, and processing means for controlling each of said servo means in various operational modes. The processing means comprises a pair of processing means, a drum servo means being controlled by one of said processing means, and the reel servo means and the capstan servo means being controlled by the other processing means.

With this construction, the burden on the microprocessor can be lightened, and interrupt processing at a predetermined timing can be realized to improve the servo performance. Furthermore, tape running can be controlled smoothly and quickly.

The invention will now be described by way of example with reference to the accompanying drawings, throughout which like parts are referred to by like references, and in which:
Figure 1 is a block diagram of an embodiment of servo control device for a VTR, and according to the present invention;
Figures 2 to 5 are respective block diagrams of parts of the embodiment; and
Figure 6 is a block diagram of a known servo control device for a VTR.

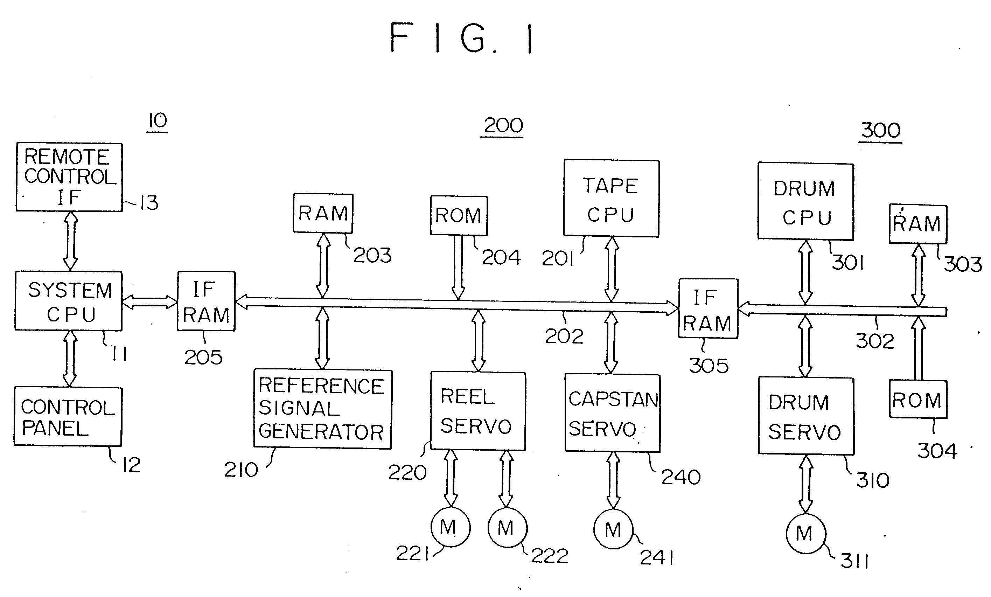

The embodiment to be described comprises the servo control device for a D-1 type VTR. Referring to Figure 1, a system control system 10 includes a system microprocessor (CPU) 11, a control panel 12 and a remote control I/O port 13.

A tape running control system 200 includes a microprocessor (CPU) 201, a reference signal generating circuit 210, a reel servo circuit 220 and a capstan servo circuit 240. These circuits 210, 220 and 240, and the microprocessor 201, are connected together by a data bus 202. Further, a RAM 203, a ROM 204 and an interface RAM 205 are connected to the data bus 202. The tape running control system 200 is connected through the interface RAM 205 to the system control system 10.

As will be hereinafter described in detail, a supply reel motor 221 and a tape-up reel motor 222 are controlled in rotation by the reel servo circuit 220, and a capstan motor 241 is controlled in rotation by the capstan servo circuit 240.

A drum control system 300 includes a microprocessor (CPU) 301 and a drum servo circuit 310, connected together by means of a data bus 302. Further, a RAM 303, a ROM 304 and an interface RAM 305 are connected to the data bus 302. The drum control system 300 is connected through the interface RAM 305 to the tape running control system 200.

A motor 311 for driving a drum (not shown) having a magnetic head mounted thereon, is controlled in rotation by the drum servo circuit 310.

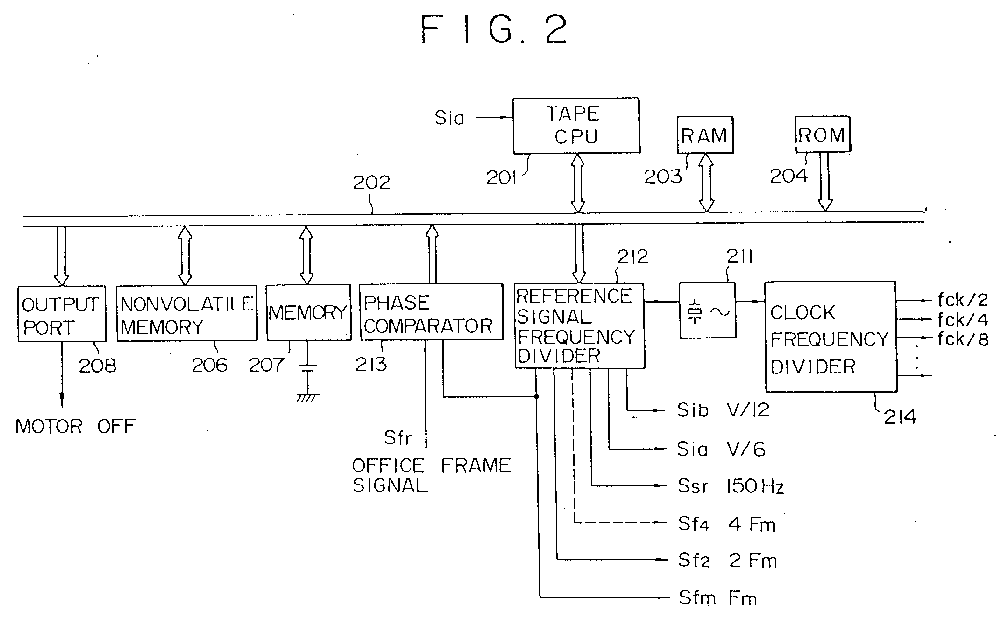

Referring to Figure 2 which shows a construction of the reference signal generating circuit 210, an output from a crystal oscillator 211 is supplied to a frequency divider 212 for generating reference signals. The frequency divider 212 forms reference signals Sfm, Sf2 and Sf4 having periods of Fm, 2Fm and 4Fm, respectively, where Fm represents a frame period, a servo reference signal (CTL pulse) Ssr having a repetition frequency of 150 Hz, and interruption signals Sia and Sib having periods of V/5 and V/12, respectively. These interruption signals Sia and Sib are synchronous in timing with the frame signal Sfm.

The reference frame signal Sfm output from the frequency divider 212 is compared in phase with a frame signal Sfr separated from an external reference signal (studio composite synchronizing signal) in a phase comparator 213, and phase difference data from the phase comparator 213 are fed back to the frequency divider 212, thereby synchronizing the outputs from the reference signal generating circuit 210 in phase with the external reference signal Sfr.

In a 525/60 type television system, the signals Sfm and Sf2 are used as a frame signal and a colour frame signal, respectively, while in a 625/50 type television system, the signals Sfm, Sf2 and Sf4 are used as a frame signal, a colour field signal and a colour frame signal, respectively.

Further, the output from the crystal oscillator 211 is supplied to a clock frequency divider 214 to form various clock signals having predetermined frequencies.

Various servo adjusting data peculiar to every VTR are preliminarily stored in a non-volatile memory 206 at the time of production or maintenance. These data are copied to another RAM when the VTR is switched on, and are used as parameters for the servo circuits.

During the operation of the VTR, primary data for the system and the servo circuits are periodically stored into a battery back-up memory 207. These data are used as analysis data for abnormality.

Further, in case of detecting an abnormality such as an increase in temperature of the motors or a failure of FG or PG, a stop command is supplied through an output port 208 to the driving circuits for all the motors.

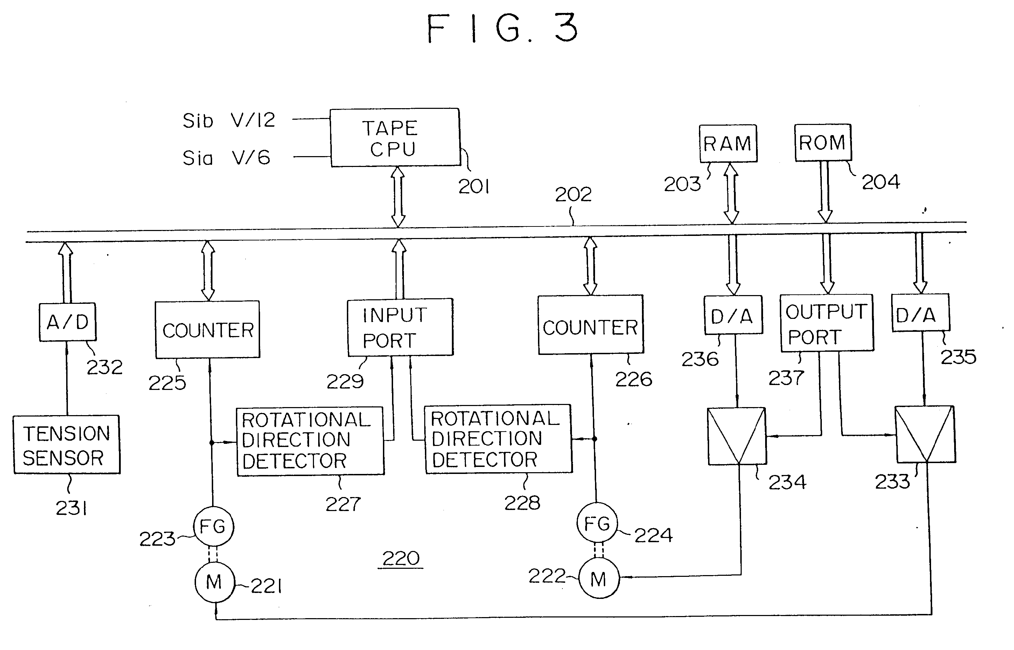

Referring to Figure 3 which shows a construction of the reel servo circuit 220, FGs 223 and 224 are connected to the supply reel motor 221 and the tape-up reel motor 222, respectively. Reel FG pulses from the FGs 223 and 224 are supplied to counters 225 and 226, respectively, and they are also supplied to rotational direction detecting circuits 227 and 228, respectively. The counters 225 and 226 are directly connected to the data bus 202, and the detecting circuits 227 and 228 are connected through an input port 229 to the data bus 202. A tension sensor 231 is connected through an analogue/digital (A/D) converter 232 to the data bus 202.

The interruption signals Sia and Sib mentioned above are supplied to the microprocessor 201. Accordingly, data from the counters 225 and 226 are fetched by the microprocessor 201 with the period of V/6, and data from the tension sensor 231 are fetched by the microprocessor 201 with the period of V/12.

Driving amplifiers 233 and 234 are connected to the reel motors 221 and 222, respectively. A driving signal from the microprocessor 201 is supplied through digital/analogue (D/A) converters 235 and 236 to the amplifiers 233 and 234, respectively, and a rotational direction signal from the microprocessor 201 is supplied through an output port 237 to the amplifiers 233 and 234.

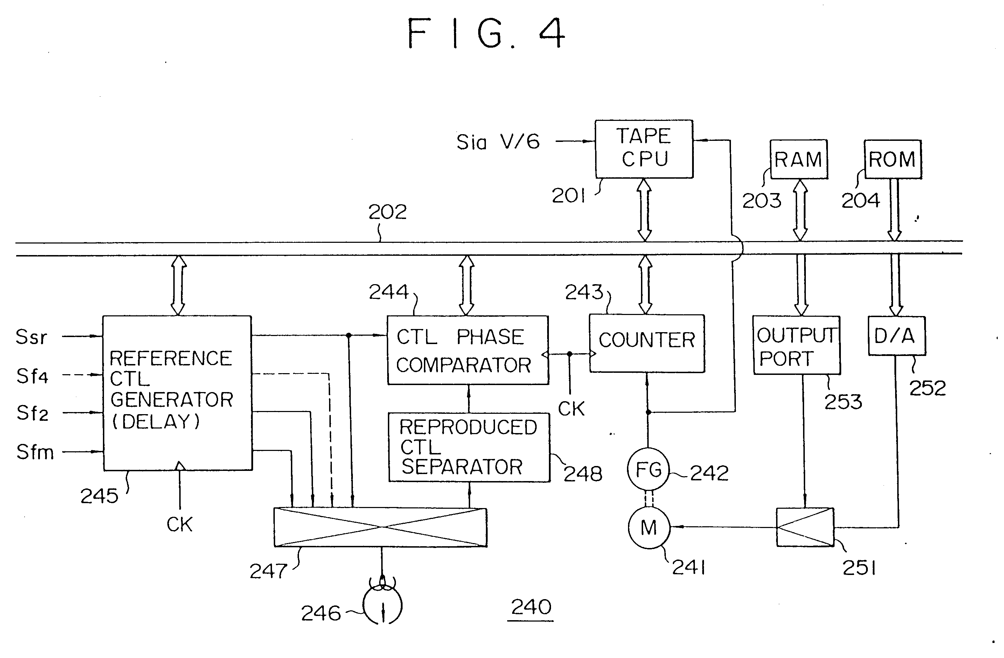

Referring to Figure 4 which shows a construction of the capstan servo circuit 240, an FG 242 is connected to the capstan motor 241. Capstan FG pulse from the FG 242 is supplied to a counter 243, and it is also supplied as an interruption signal to the microprocessor 201. The clock CK is supplied to the counter 243, and a clock count value during every FG period is supplied from the counter 243.

The reference CTL pulse Ssr from the frequency divider 212 shown in Figure 2 is supplied through a delay circuit 245 to a phase comparator 244, and a reproduced CTL pulse from a CTL head 246 is supplied through a selector switch 247 and a CTL separating circuit 248 to the phase comparator 244. The CTL pulses are compared in phase with each other, and phase difference data from the phase comparator 244 is fetched by the microprocessor 201.

In a recording mode, the reference signals Sfm to Sf4 as a frame signal, a colour frame signal, etc. are supplied together with the reference CTL pulse Ssr from the delay circuit 245 to the CTL head 246.

A driving amplifier 251 is connected to the capstan motor 241. A driving signal from the microprocessor 201 is supplied through a D/A converter 252 to the amplifier 251, and a rotational direction signal from the microprocessor 201 is supplied through an output port 253 to the amplifier 251.

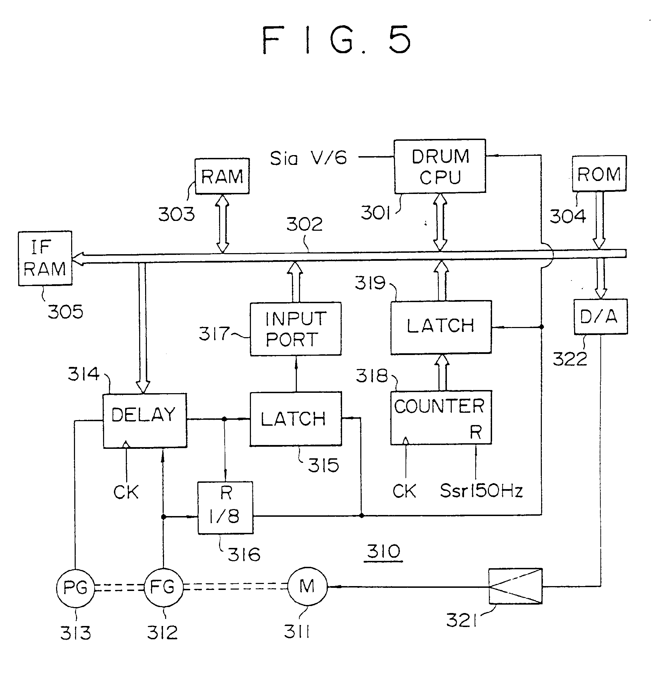

Referring to Figure 5, which shows a construction of the drum servo circuit 310, an FG 312 and a PG 313 are connected to the drum motor 311. The drum FG pulse and the drum PG pulse are supplied from the FG 312 and the PG 313 to a delay circuit 314, respectively. The PG pulse from the delay circuit 314 is supplied to a first latch 315, and it is also supplied as a reset signal to a 1/8 frequency divider 316. The FG pulse from the FG 312 is also supplied to the frequency divider 316. An output from the frequency divider 316 is supplied to the latch 315. The latch 315 is connected through an input port 317 to the data bus 302.

The clock CK is supplied to a counter 318, and the CTL pulse is also supplied as a reset signal to the counter 318. An output from the counter 318 is supplied to a second latch 319. The output from the frequency divider 316 is commonly supplied to both the latch 319 and the microprocessor 301. The latch 319 is connected to the data bus 302.

A driving amplifier 321 is connected to the drum motor 311, and a driving signal from the microprocessor 301 is supplied through a D/A converter 322 to the amplifier 321.

Each servo control in the embodiment will now be described.

In the reel servo circuit 220 shown in Figure 3, reel FG pulses from 700 cycles, for example, are supplied from each of the FGs 223 and 224 per rotation of each of the reel motors 221 and 222.

The FG pulses from the FGs 223 and 224 are counted by the counters 225 and 226, respectively, and the count values from the counters 225 and 226 are fetched by the microprocessor 201 with the period of V/6. In the microprocessor 201, a rotational amount of each reel motor per unit time, that is, rotational speed ω is detected on the basis of a difference between the previous count value and the present count value. The rotation speed reaches 70 rps, for example.

In the microprocessor 201, a total amount of a tape is first obtained on the basis of the count values of both reel FG pulses and the count value of the capstan FG pulses per unit time. Subsequently, diameters Rs and Rt of tape windings around the supply reel and the take-up reel are also detected on the basis of rotations of both the reel motors per unit time. Then a tape running speed Vmt is obtained from the diameter of the tape winding around the tape-up reel and the rotational speed of the tape-up reel, and a difference between the tape running speed Vmt and a command set speed Vcm, that is, a speed error Vε is detected.

In the microprocessor 201, torques Tq necessary for the supply reel motor 221 and the tape-up reel motor 222 are obtained in the following manner, and required driving signals are supplied through the D/A converters 235 and 236 to the amplifiers 233 and 234, respectively.

A torque Tqs necessary for the supply reel motor 221 is the sum of the product of a tension Ts converted from the speed error and the diameter Rs of the tape winding and the product of a moment of inertia Is depending upon the diameter Rs and a set acceleration Acm. That is, the torque Tqs is expressed as follows:${\text{Tqs = Ts}}^{\text{.}} {\text{Rs + Is}}^{\text{.}} \text{Acm}$

On the other hand, a torque Tqt necessary for the take-up reel motor 222 is the sum of the product of a tension Tt set in accordance with a command and the diameter Rt of the tape winding and the product of a moment of inertia It depending upon the diameter Rt and the set acceleration Acm. That is, the torque Tqt is expressed as follows:${\text{Tqt = Tt}}^{\text{.}} {\text{Rt + It}}^{\text{.}} \text{Acm}$

As mentioned above, the data from the tension sensor 231 are fetched by the microprocessor 201 with the period of V/12, and are fed back to the driving signals for driving both the reel motors 221 and 222 so as to make the tension in the tape path constant.

In the capstan servo circuit 240 shown in Figure 4, capstan FG pulses of 90 cycles, for example, are output from the FG 242 per rotation of the capstan motor 241. The clock CK during the FG pulse period is counted by the counter 243, and the count value in every FG pulse period is fetched by the microprocessor 201. In the microprocessor 201, a rotation speed ω of the capstan motor 241 is detected on the basis of the count value from the counter 243, and a difference between the rotational speed ω and a command rotation speed ωcm, that is, a rotational speed error ωε is detected.

In the phase comparator 244, the phase of the reference CTL pulse Ssr from the delay circuit 245 is compared with the phase of the reproduced CTL pulse from the head 246, and a phase error data from the comparator 244 is fetched by the microprocessor 201 at the rate of once in every three times of the period of V/6 (that is, with the period of V/2). In the microprocessor 201, the phase error is converted into a rotational speed error ωδ.

In the microprocessor 201, the torque necessary for the capstan motor 241 is obtained on the basis of the sum of the rotational speed errors ωε and ωδ, and a required driving signal is supplied through the D/A converter 252 to the amplifier 251.

A forward or reverse rotational direction signal is formed according to a command from the system control system 10, and is supplied through the output port 253 to the amplifier 251.

In the drum servo circuit 310 shown in Figure 5, the drum FG pulses of 48 cycles, for example, are output from the FG 312, and the PG pulse of one cycle is output from the PG 313 per rotation, and PG pulse of one cycle is output from the PG 313 per rotation of the motor 311.

The FG pulse divided in frequency by eight in the frequency divider 316 interrupts the microprocessor 301, latches the PG pulse from the delay circuit 314 in the latch 315, and latches the output from the counter 318 in the latch 319.

Since the rotational speed of the drum is set to 150 rps in the D-1 type VTR, the interrupt period of the frequency-divided FG pulse becomes 1.1 mS, and the repetition frequency of the PG pulse becomes 150 Hz.

Substantially like the capstan servo circuit 240 described above, in the drum servo circuit 310 clock CK during the period of the reference CTL pulse Ssr is counted by the counter 318, and the count value is fetched by the microprocessor 301 through the latch 319 at every frequency-divided FG pulse period.

Further, phase data of the delayed PG pulse in the latch 315 are fetched by the microprocessor 301 through the input port 317 at every frequency-divided FG pulse period, and it is determined whether or not the phase data are a start phase on the basis of the polarity. If it is determined that the phase data are a start phase, the data in the latch 319 at this time are taken as start data.

These start data are subtracted from the data in the latch 319 to be subsequently fetched at every frequency-divided FG pulse period.

In the microprocessor 301, reference data for the drum servo are formed from the adjusting data previously stored in the non-volatile memory 206 and the frequency data of the external reference signal.

These reference data are not only a speed reference but also a phase reference, and are compared with the result of the above subtraction at every frequency-divided FG pulse period.

A driving signal corresponding to the error thus obtained is supplied through the D/A converter 322 to the amplifier 321. Accordingly, in the drum control system 300, both the speed servo and the phase servo are effected per rotation of the motor 311.

Further, in an FF mode, the rotational speed of the drum motor 311 is reduced in proportion to the tape speed data to be fed from the microprocessor 201 of the tape running control system 200.

Additionally, since the amount of communication data between the tape running control system 200 and the drum control system 300 is small, the interface RAM 305 and the RAM 303 can be accommodated in the same package.

## Claims

1. A servo control device for a video signal recording and reproducing apparatus including a rotary magnetic head, a supply reel around which a magnetic tape is wound, a take-up reel for taking up said magnetic tape, and a capstan for transporting said magnetic tape between said reels via said magnetic head, wherein a video signal is recorded on and/or reproduced from said magnetic tape in normal operating modes by said magnetic head, said servo control device comprising:
first servo means (310) for generating a first condition signal indicative of a rotational condition of said magnetic head, and rotationally driving said magnetic head according to a first control signal;
second servo means (220) for generating a second condition signal indicative of a rotational condition of said supply reel and a third condition signal indicative of a rotational condition of said take-up reel, rotationally driving said supply reel according to a second control signal, and rotationally driving said take-up reel according to a third control signal;
third servo means (240) for generating a fourth condition signal indicative of a rotational condition of said capstan, and rotationally driving said capstan according to a fourth control signal; and
a microprocessor (301) for receiving said first condition signal and generating said first control signal for controlling rotation of said magnetic head according to said first condition signal;
characterised by:
a second microprocessor (201) for receiving said second, third and fourth condition signals and generating said second control signal for controlling rotation of said supply reel, said third control signal for controlling rotation of said take-up reel, and said fourth control signal for controlling rotation of said capstan, according to said second, third and fourth condition signals; and
control means (11) for controlling said firstmentioned microprocessor (301) and said second microprocessor (201) in dependence on a command signal.

2. A device according to claim 1 further comprising sensor means (231) for sensing the tension of said magnetic tape, wherein said second microprocessor (201) receives a fifth condition signal from said sensor means (231) and derives control information for controlling the tension of said magnetic tape in dependence on said fifth condition signal to be included in said second and/or third control signal.

3. A device according to claim 2 further comprising reference signal generating means (210) for generating a reference signal according to an external composite synchronizing signal, wherein said firstmentioned and second microprocessors (301, 201) are independently controlled by said reference signal to derive the respective condition signals.

4. A device according to claim 3 further comprising non-volatile memory means (206) for storing adjustment data peculiar to said apparatus at the time of production or maintenance, wherein said firstmentioned and second microprocessors (301, 201) read said adjusting data from said non-volatile memory means (206) according to said modes and use said adjusting data to control said first to third servo means (310, 220, 240).

5. A device according to any one of the preceding claims, wherein said control means (11) comprises a third microprocessor (11).

## Patentansprüche

1. Servosteuervorrichtung für ein Videosignal-Aufzeichnungs- und -Wiedergabegerät mit einem rotierenden Magnetkopf, einer Abwickelspule, um die ein Magnetband herumgewickelt ist, einer Aufwickelspule für die Aufnahme des genannten Magnetbandes und einer Bandantriebswelle für den Transport des genannten Magnetbandes zwischen den Spulen an dem betreffenden Magnetkopf vorbei,
wobei ein Videosignal bei Normal-Betriebsarten durch den genannten Magnetkopf auf dem Magnetband aufgezeichnet und/oder von diesem wiedergegeben wird,
mit einer ersten Servoeinrichtung (310) für die Erzeugung eines ersten Zustands-Signals, welches kennzeichnend ist für einen Drehzustand des genannten Magnetkopfes, und für den Drehantrieb des betreffenden Magnetkopfes entsprechend einem ersten Steuersignal,
mit einer zweiten Servoeinrichtung (220) für die Erzeugung eines zweiten Zustands-Signals, welches kennzeichnend ist für einen Drehzustand der Abwickelspule, und eines dritten Zustands-Signals, welches kennzeichnend ist für einen Drehzustand der Aufwickelspule, sowie für den Drehantrieb der Abwickelspule entsprechend einem zweiten Steuersignal und für den Drehantrieb der Aufwickelspule entsprechend einem dritten Steuersignal,
mit einer dritten Servoeinrichtung (240) für die Erzeugung eines vierten Zustands-Signals, welches kennzeichnend ist für einen Drehzustand der Bandantriebswelle, und für den Drehantrieb der betreffenden Bandantriebswelle entsprechend einem vierten Steuersignal,
und mit einem Mikroprozessor (301) zur Aufnahme des ersten Zustands-Signals und Erzeugung des ersten Steuersignals für die Steuerung der Drehung des Magnetkopfes entsprechend dem ersten Zustands-Signal,
**gekennzeichnet**
durch einen zweiten Mikroprozessor (201) für die Aufnahme der zweiten, dritten und vierten Zustands-Signale und für die Erzeugung des zweiten Steuersignals zur Steuerung der Drehung der Abwickelspule, des dritten Steuersignals zur Steuerung der Drehung der Aufwickelspule und des vierten Steuersignals zur Steuerung der Drehung der Bandantriebswelle entsprechend den zweiten, dritten bzw. vierten Zustands-Signalen
und durch eine Steuereinrichtung (11) für die Steuerung des erstgenannten Mikroprozessors (301) und des zweiten Mikroprozessors (201) in Abhängigkeit von einem Befehlssignal.

2. Vorrichtung nach Anspruch 1, umfassend ferner eine Sensoreinrichtung (231) für die Ermittlung der Spannung des Magnetbandes, wobei der zweite Mikroprozessor (201) ein fünftes Zustands-Signal von der betreffenden Sensoreinrichtung (231) aufnimmt und zur Steuerung der Spannung des genannten Magnetbandes in Abhängigkeit von dem fünften Zustands-Signal eine Steuerinformation ableitet, welche in das genannte zweite und/oder dritte Steuersignal einzubeziehen ist.

3. Vorrichtung nach Anspruch 2, umfassend ferner eine Referenzsignal-Erzeugungseinrichtung (210) für die Erzeugung eines Referenzsignals entsprechend einem externen Synchronisiersignalgemisch, wobei der erstgenannte Mikroprozessor (301) und der zweite Mikroprozessor (201) durch das genannte Referenzsignal zur Ableitung der entsprechenden Zustands-Signale unabhängig gesteuert sind.

4. Vorrichtung nach Anspruch 3, umfassend ferner eine nichtflüchtige Speichereinrichtung (206) für die Speicherung von Einstelldaten, die charakteristisch sind für das Gerät zum Zeitpunkt der Produktion oder Wartung,
wobei der erstgenannte Mikroprozessor (301) und der zweite Mikroprozessor (201) die genannten Einstelldaten aus der nichtflüchtigen Speichereinrichtung (206) entsprechend den Betriebsarten lesen und die betreffenden Einstelldaten zur Steuerung der ersten bis dritten Servoeinrichtungen (310, 220, 240) heranziehen.

5. Vorrichtung nach irgendeinem der vorhergehenden Ansprüche, wobei die genannte Steuereinrichtung (11) einen dritten Mikroprozessor (11) umfaßt.

## Revendications

1. Dispositif de commande d'asservissement pour un appareil d'enregistrement et de reproduction de signaux vidéo comprenant une tête magnétique rotative, une bobine d'alimentation autour de laquelle est enroulée une bande magnétique, une bobine réceptrice pour recevoir ladite bande magnétique, et un cabestan pour transporter ladite bande magnétique entre lesdites bobines par l'intermédiaire de ladite tête magnétique dans lequel un signal vidéo est enregistré sur et/ou reproduit depuis ladite bande magnétique dans des modes de fonctionnement normaux par ladite tête magnétique, ledit dispositif de commande d'asservissement comportant :
des premiers moyens d'asservissement (310) pour générer un premier signal de condition représentatif d'une condition de rotation de ladite tête magnétique, et entraîner en rotation ladite tête magnétique conformément à un premier signal de commande ;
des seconds moyens d'asservissement (220) pour générer un second signal de condition représentatif d'une condition de rotation de ladite bobine d'alimentation et un troisième signal de condition représentatif d'une condition de rotation de ladite bobine réceptrice, entraîner en rotation ladite bobine d'alimentation selon un second signal de commande, et entraîner en rotation ladite bobine réceptrice selon un troisième signal de commande;
des troisièmes moyens d'asservissement (240) pour générer un quatrième signal de condition représentatif d'une condition de rotation dudit cabestan, et entraîner en rotation ledit cabestan selon un quatrième signal de commande ; et
un microprocesseur (301) pour recevoir ledit premier signal de condition et générer ledit premier signal de commande pour commander une rotation de ladite tête magnétique selon ledit premier signal de condition ;
caractérisé par :
un second microprocesseur (201) pour recevoir lesdits second, troisième et quatrième signaux de condition et générer ledit second signal de commande pour commander une rotation de ladite bobine d'alimentation, ledit troisième signal de commande pour commander une rotation de ladite bobine réceptrice, et ledit quatrième signal de commande pour commander une rotation dudit cabestan, selon lesdits second, troisième et quatrième signaux de condition ; et
des moyens de commande (11) pour commander ledit microprocesseur mentionné en premier lieu (301) et ledit second microprocesseur (201) en fonction d'un signal de commande.

2. Dispositif selon la revendication 1, comportant en outre un capteur (231) pour détecter la tension de ladite bande magnétique, dans lequel ledit second microprocesseur (201) reçoit un cinquième signal de condition dudit capteur (231) et extrait une information de commande pour commander la tension de ladite bande magnétique en fonction dudit cinquième signal de condition à englober dans ledit second et/ou troisième signal de commande.

3. Dispositif selon la revendication 2, comportant en outre des moyens de génération de signal de référence (210) pour générer un signal de référence selon un signal de synchronisation composite extérieur, dans lequel lesdits premier et second microprocesseurs (301, 201) sont commandés indépendamment par ledit signal de référence pour délivrer les signaux de condition respectifs.

4. Dispositif selon la revendication 3, comportant en outre une mémoire non volatile (206) pour mémoriser des données de réglage particulières audit appareil au moment de la fabrication ou de l'entretien, dans lequel lesdits premier et second microprocesseurs (301, 201) lisent lesdites données de réglage de ladite mémoire non volatile (206) selon lesdits modes et utilisent lesdites données de réglage pour commander lesdits premier à troisième moyens d'asservissement (310, 220, 240).

5. Dispositif selon l'une quelconque des revendications précédentes, dans lequel lesdits moyens de commande (11) comportent un troisième microprocesseur (11).
